Europäisches Patentamt

European Patent Office

Office européen des brevets

(19)

(11) Numéro de publication: **0 013 976**
**B1**

(12) **FASCICULE DE BREVET EUROPEEN**

(45) Date de publication du fascicule du brevet: **10.11.82**

(51) Int. Cl.³: **B 65 G 59/06**

(21) Numéro de dépôt: **80100331.0**

(22) Date de dépôt: **23.01.80**

(54) **Dispositif pour la distribution de produits surgelés.**

(30) Priorité: **29.01.79 FR 7902199**

(43) Date de publication de la demande:
**06.08.80 Bulletin 80/16**

(45) Mention de la délivrance du brevet:
**10.11.82 Bulletin 82/45**

(84) Etats contractants désignés:
**AT BE CH DE FR GB IT LU NL SE**

(56) Documents cités:
**FR - A - 2 180 591**
**FR - A - 2 183 746**
**US - A - 2 631 440**
**US - A - 3 241 688**

(73) Titulaire: **Guigan, Jean**
**9, rue Jean Mermoz**
**F-75008 Paris (FR)**

(72) Inventeur: **Guigan, Jean**
**9, rue Jean Mermoz**
**F-75008 Paris (FR)**

(74) Mandataire: **Weinmiller, Jürgen et al,**
**Zeppelinstrasse 63**
**D-8000 München 80 (DE)**

Courier Press, Leamington Spa, England.

# Dispositif pour la distribution de produits surgelés

L'invention concerne un dispositif pour la distribution de produits surgelés disposés en piles de colis essentiellement verticales comportant des moyens de préhension associés à chaque pile et des moyens permettant de désolidariser le colis inférieur de ladite pile tandis que les autres colis restent maintenus.

Un tel dispositif est connu, voir par exemple le document US—A 2 631 440. Chaque pile de ce dispositif repose sur un plateau mobile et elle est associée à des moyens latéraux de préhension et à des moyens de désolidarisation. Ces derniers moyens comportent des pistons horizontaux qui permettent de déplacer d'abord légèrement le dernier colis de la pile pour qu'il se désolidarise de la pile et de transporter ensuite ce colis vers une sortie de distribution pendant que les autres colis de la pile restent maintenus par les moyens latéraux de préhension. Enfin, le plateau reprend la charge de la pile et la fait descendre après relâchement des moyens latéraux de préhension.

Le plus grand problème d'un tel dispositif réside dans le fait que les colis de produits surgelés ont tendance à se coller entre eux et aux parois fixes de guidage. Pour casser la glace entre deux colis, le dispositif connu propose une attaque excentrique au dernier colis par les pistons horizontaux lors de la désolidarisation, cette attaque faisant basculer le colis. Or, pour cette opération de désolidarisation, il faut monter un doigt verticalement à côté du plateau, ce doigt devant ensuite disparaître. En outre, cette mesure ne résoud pas le problème de la glace qui risque de coller les colis contre les moyens latéraux de préhension.

L'invention a pour but de proposer un dispositif qui est mécaniquement moins compliqué et qui réduit notablement le risque de gel entre les moyens latéraux de préhension et la pile. Ce but est atteint par un dispositif tel que défini ci-dessus, qui est caractérisé par le fait que les portions des moyens de préhension et/ou de désolidarisation destinés à être en contact avec les colis sont essentiellement gonflables de façon que le gonflage ait pour effet de casser toute éventuelle formation de glace à la surface desdits moyens.

Il faut remarquer que la préhension d'objets à l'aide d'éléments gonflables est en soi connue, par exemple du document FR—A 2 180 591. Néanmoins, les objets étant des bouteilles, ce document ne donne aucune indication concernant le problème de la glace et l'intérêt d'utiliser des éléments gonflables pour casser la glace entre ces éléments et les objets.

Enfin, on connait par le document FR—A 2 183 746 un dispositif de distribution une par une des pièces plates empilées comportant des moyens latéraux de préhension et des moyens de dégagement de la dernière pièce de la pile. Ces moyens n'étant pas gonflables et le dispositif n'étant pas destiné à gérer des produits surgelés, les problèmes posés par ces produits ne sont pas résolus par ce dispositif.

L'invention sera expliquée ci-après plus en détail à l'aide de plusieurs mises en oeuvre préférées et des dessins.

— la figure 1 illustre schématiquement les moyens de préhension et de désolidarisation associés à une pile de colis contenant des produits surgelés, conformément à l'invention,

— la figure 2 est une vue schématique partielle de dessus d'un distributeur conforme à l'invention, contenant une pluralité de piles de colis,

— la figure 3 représente une réalisation possible des moyens de préhension et de désolidarisation avec des éléments gonflables indépendants,

— la figure 4 illustre en coupe axiale une variante possible pouvant remplacer certains éléments gonflables de la figure 3,

— la figure 5 montre schématiquement les différentes phases de fonctionnement du dispositif de la figure 3, depuis la phase repos en a) jusqu'au retour à cette phase en h) après distribution du colis inférieur en f).

— la figure 6 représente schématiquement une autre réalisation possible des moyens de préhension et de désolidarisation avec des éléments gonflables indépentants selon l'invention.

— les figures 7 et 8 illustrent schématiquement un élément gonflable de la précédente figure respectivement en position de repos et en position gonflée.

— la figure 9 montre schématiquement les différentes phases de fonctionnement du dispositif de la figure 6 depuis la phase repos en a) jusqu'au retour à cette phase en h) après distribution du colis inférieur en e).

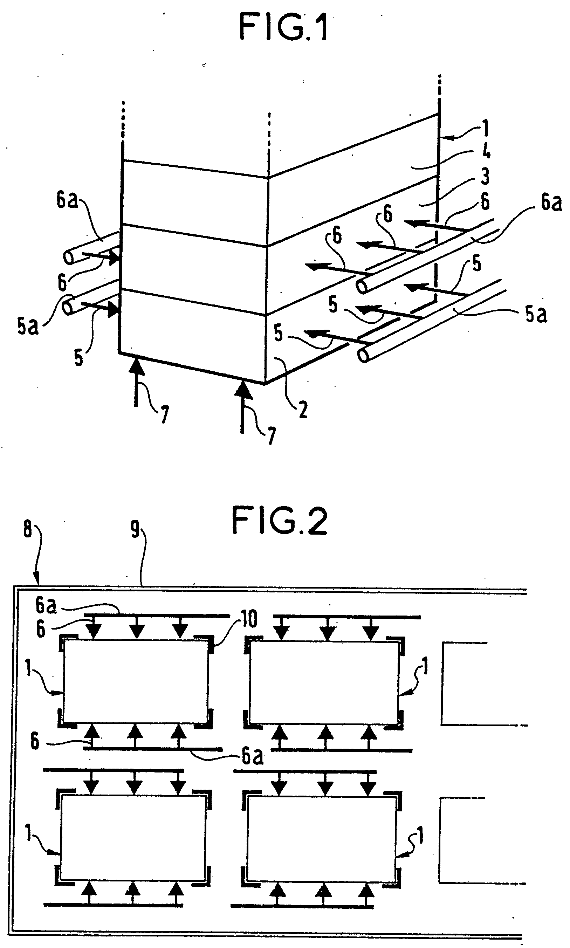

Figure 1, une pile 1 de colis contenant des produits surgelés, disposée dans un environnement maintenu en permanence à une température suffisamment basse (pouvant atteindre —40°C), se voit associer un dispositif conforme à l'invention, comportant des moyens de préhension, et des moyens permettant de désolidariser le colis inférieur 2 tandis que les autres colis 3, 4 etc... restent maintenus, lesdits moyens de préhension et de désolidarisation étant conçus de telle façon que tout risque d'éventuel collage entre lesdits moyens et les colis, sous l'effet de la glace, soit écarté. Ces moyens sont ici symbolisés par des flèches: les moyens de préhension co-opérent de préférence d'une part avec deux faces latérales opposées des deux derniers colis 2, 3 au moins d'une même pile (flèches 5, 6 respectivement), et d'autre part avec la face inférieure du dernier colis 2 (flèches 7), tout en pouvant s'escamoter de ladite face inférieure pour libérer le passage de ce dernier colis en vue de la distribution de celui-ci, ainsi que cela sera illustré plus loin. Les moyens de désolidarisation du dernier colis 2 pourraient être intépendants, mais il est intéressant de prévoir que les moyens de préhension associés à ce colis (flèches 5) deviennent des moyens de désolidarisation dudit colis lorsque la pression de contact contres les faces latérales opposées diffère d'une face à l'autre: ainsi, avec une pression symétrique, ces mêmes moyens remplissent une fonction de préhension, alors qu'avec une pression inégale de part et d'autre ils remplissent une fonction de désolidarisation en imprimant au dernier colis un léger mouvement latéral par rapport au colis immédiatement supérieur, ce qui a pour effet de garantir le décollement quel que soit l'importance de l'effort de collage à vaincre.

L'aspect fondamental de l'invention réside bien dans le fait que ces moyens de préhension et de désolidarisation sont conçus de telle façon que tout risque de collage à un colis (aux zones de contact représentées par l'extrémités des flèches symboliques 5, 6, 7) est écarté. A cet effet, une modalité préférentielle consiste à prévoir que les moyens de préhension et ou de désolidarisation destinés à être en contact avec les colis sont essentiellement gonflables, de façon que le gonflage ait pour effet de casser toute éventuelle formation de glace, ce qui élimine tout risque d'un collage redhibitoire pour une distribution fiable. On a schématisé par des éléments 5a et 6a les alimentations en fluide sous pression associées respectivement aux moyens 5 et 6. On pourrait naturellement aussi prévoir, pour certains au moins des moyens, des éléments mobiles dont les portions destinées à venir en contact avec les colis seraient revêtues de matériau à bas coefficient de frottement tel que silicone ou téflon.

Ce qui est représenté en figure 1 constitue un sous-ensemble associé à une pile; en figure 2, on a illustré un distributeur 8 délimité par une enceinte 9 et contenant plusieurs piles guidées et maintenues par des éléments tels que 10, dont chacune se voit affecter des moyens associés de préhension et de désolidarisation. A partir d'une conception précise de ces moyens, il sera aisé pour l'homme de l'art de prévoir une ossature rigide propre d'une part à fixer lesdits moyens et d'autre part à recevoir directement les piles de colis provenant d'un container isotherme, et des moyens de commande relevant d'automatismes classiques permettant de distribuer le colis inférieur d'une pile déterminée en agissant sur les moyens de préhension et de désolidarisation associés à ladite pile, ledit container pouvant être par ailleurs utilisé directement pour la fermeture de l'enceinte du distributeur.

Il va de soi que de nombreuses conceptions sont possibles pour réaliser les moyens de préhension et de désolidarisation associés à chaque pile.

On peut prévoir un élément creux déformable unique (non représenté), de part et d'autre de la partie inférieure de la pile de colis, combinant à la fois les fonctions de préhension et de désolidarisation par sa seule déformation sous l'effet d'air sous pression, l'élément assurant à l'étant dégonflé la tenue de la pile, et maintenant l'avantdernier colis tout en désolidarisant le dernier colis de celui-ci à l'état gonflé.

On a choisi de représenter une autre conception possible utilisant des éléments gonflables indépendants.

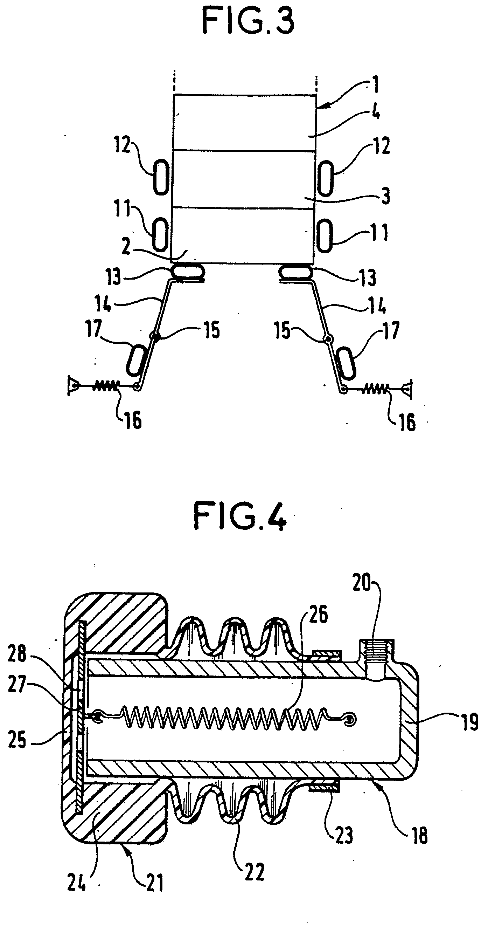

Figure 3, le dispositif comporte de part et d'autre des deux derniers colis 2, 3, au moins, des éléments gonflables respectivement 11, 12 en regard de deux faces latérales opposées desdits colis, et des éléments gonflables 13 associés à la face inférieure du dernier colis 2 et montés sur un organe mobile associé 14 permettant leur escamotage à la distribution dudit colis. L'organe mobile 14, pivotant sur un axe 15, est rappelé en permanence par des moyens élastiques 16 vers sa position de soutien de la pile associée, et est actionné pour son escamotage par un élément gonflable 17.

Les éléments gonflables 11, 12, en forme de coussins à un ou plusieurs compartiments, peuvent être encore remplacés par des pistons procurant un contact plus ponctuel avec la face du colis en regard. Un tel piston 18 a été illustré en figure 4: la partie fixe est un corps cylindrique 19 présentant une entrée d'air 20 (de préférence un air deshydraté, par exemple par passage sur un gel de silice), et la partie mobile 21 est formée d'un soufflet arrière 22 entourant le corps 19 et maintenu par une bague 23, et d'un bourrelet avant 24 raccordé audit soufflet et présentant une face d'extrémité 25 suffisamment mince pour se déformer lorsque le piston est alimenté en air sous pression. Le bourrelet 24 est raccordé au corps fixe par l'intermédiaire de moyens de reppel élastiques 26 s'accrochant sur une rondelle rigide coaxiale 27 qui est encastrée et percée d'orifices 28. La partie mobile 21, par exemple en élastomère peu propice à l'adhérence de la glace sur sa surface, présente une double déformation sous l'effet de la pression d'air: allongement du soufflet 22 avec translation du bourrelet 24, et bombement de la paroi mince d'extrémité 25.

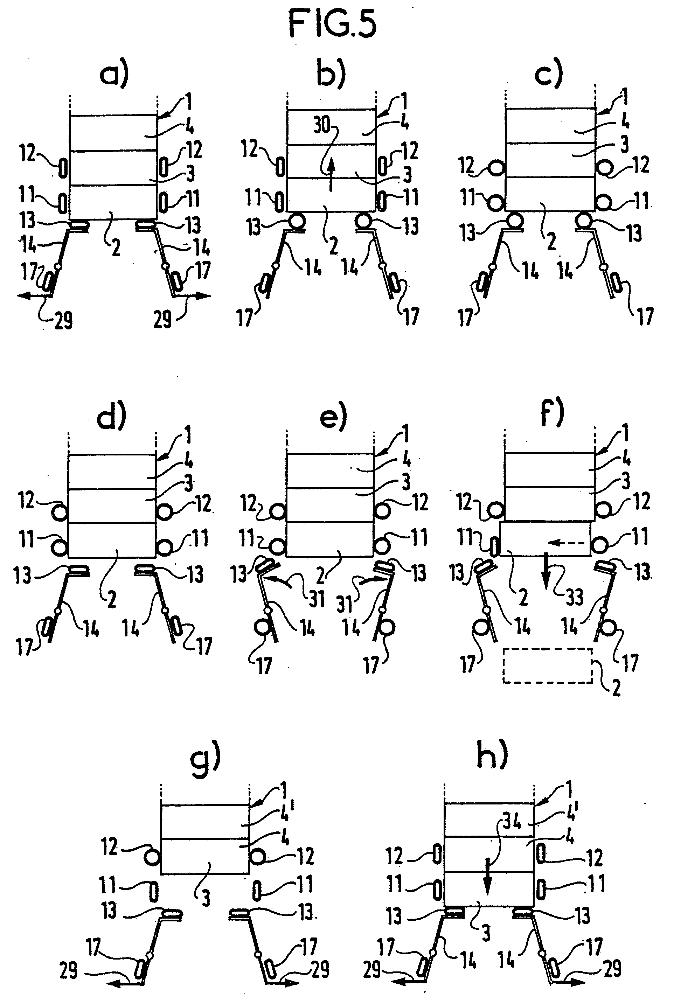

Le fonctionnement du dispositif, qu'il comporte de coussins gonflables ou des pistons ne change pas dans son principe général, et va être décrit schématiquement en regard de la figure 5:

— a) les éléments gonflables 11, 12, 13, 17 sont à l'état dégonflé, le maintien de la pile du colis étant assuré par les organes 14 maintenus en position par les seuls moyens de rappel élastiques (fléche 29): c'est la position de repos, pour laquelle il est avantageux que le minimum d'éléments travaillent;

— b) les éléments 13 sont gonflés, ce qui casse toute éventuelle formation de glace sur la surface desdits éléments et/ou contre la face inférieure du dernier colis 2, et ceci a pour effet de soulever légèrement la pile du colis (flèche 30);

— c) les éléments 11, 12 sont gonflés, ce qui casse toute éventuelle formation de glace sur la surface desdits éléments;

— d) les éléments 13 sont relâchés, la pile restant alors maintenue par les éléments 11, 12;

— e) les éléments 17 sont gonflés, ce qui d'une part casse toute éventuelle formation de glace sur la surface desdits éléments et/ou contre la portion en regard de l'organe mobile 14, et d'autre part a pour effet de faire basculer les organes 14 pour libérer le passage (flèches 31);

— f) l'un des éléments 11 est relâché, ce qui désolidarise le dernier colis du restant de la pile par un léger mouvement latéral (flèche 32), ce colis tombant alors par simple gravité (flèche 33) vers une goulotte inférieure du distributeur (non représentée), le restant de la pile étant toujours maintenu par les éléments 12;

— g) l'élément 11 encore gonflé est relâché, ainsi que les éléments 17, ce qui a pour effet de ramener les organes mobiles 14 en position de repos et de soutien de la pile;

— h) les éléments 12 sont enfin relâchés, ce qui laisse retomber la pile (flèche 34), et on revient à la position de repos total illustrée en a).

Les étapes successives ont été représentées séparement pour plus de clarté, mais plusieurs étapes pourront naturellement être effectuées simultamément (d et e) par exemple, de sorte que l'ensemble requiert un temps de fonctionnement très court.

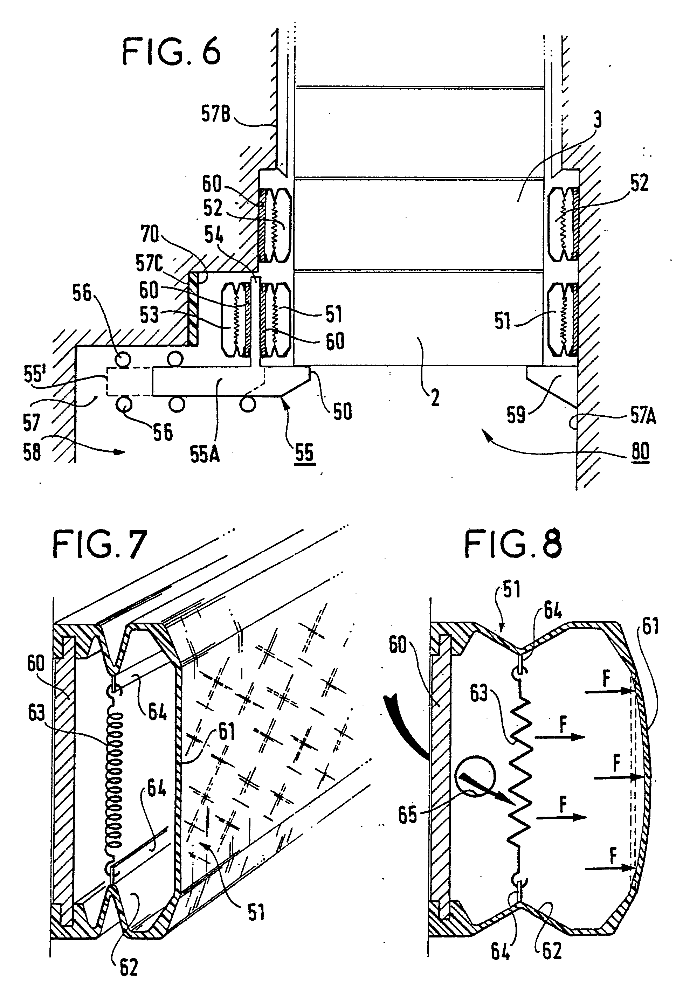

Figure 6 le dispositif selon une autre réalisation possible comporte de part et d'autre des deux derniers colis 2, 3, au moins, des éléments gonflables respectivement 51, 52 en regard de deux faces latérales opposées desdits colis. La figure 6 montre en outre un élément gonflable 53 fixé contre une face d'un épaulement 54 solidaire d'un plateau coulissant 55 pouvant se déplacer avec un coefficient de frottement minimal entre des patins 56 de section cylindrique ou triangulaire par exemple, fixés sur les deux parois latérales 57 du container 80 renfermant les colis et plus précisément dans les parois d'un évidement 58 dudit container. Le plateau 55 comporte deux bras de guidage 55A ayant une surface minimale de contact avec lesdits patins 56; de la sorte on réduit au maximum toute accumulation de givre ou de glace sur ceux-ci d'une part, et d'autre part on assure un frottement minimal du plateau. Il faut également noter qu'au cours de son déplacement, le plateau 55 casse la glace éventuellement déposée sur la surface de ses éléments de guidage, et celle-ci tombe librement dans l'évidement 58, en dessous du plateau coulissant 55 lequel au cours de son déplacement dans l'évidement 58 prend la position illustrée en traits tiretés en 55'. Le plateau 55 ainsi que les patins 56 sont réalisés en un matériau tel que le téflon apte à éviter une forte création de givre sur leur surface.

Par ailleurs, les colis empilés dans le container 80 délimité par les parois 57 ainsi que par les parois 57A et 57B reposent par l'intermédiaire de la partie inférieure du dernier colis 2 d'une part sur des doigts de maintien fixes 59 réalisés de même en téflon et solidaires de la paroi 57A et d'autre part sur les extrémités échancrées 50 du plateau coulissant 55.

En outre, la paroi 57C du logement contre laquelle vient buter l'élément gonflable 53 lors du déplacement du plateau 55 dans l'évidement 58 est munie d'un revêtement déformable 70 réalisé en un matériau élastomère, apte à éviter toute accumulation de glace ou de givre par cassure de celui-ci lors du contact de l'élément 53 contre ledit revêtement 70.

On voit en outre que l'un des éléments gonflables 51 est fixé sur l'autre face de l'épaulement 54. La figure 7 illustre la structure de l'un des éléments gonflables 51, 52 ou 53 indifféremment. Un tel élément comprend donc une paroi rigide 60 sur laquelle est adaptée une partie déformable ou soufflet 61. Cette partie déformable 61 présente une partie médiane 62 en forme de deux V dont les extrémités sont en vis-à-vis et sont réunis entre elles au moyen de ressorts internes de rappel tels que 63 fixés à des renforts 64 solidaires desdits V. Dans un autre mode de réalisation lesdits ressorts 63 peuvent être remplacés par une membrane extensible (non représentée) comportant des ouvertures pour le passage d'air comprimé; ladite membrane s'étend entre les renforts 64 et est solidaire de ceux-ci. En se référant à nouveau à la figure 6 on voit que les éléments gonflables 52 ainsi que l'un des éléments 51 sont fixés aux parois du container par l'intermédiaire de leurs parois rigides 60, tandis que l'autre élément 51 et l'élément 53 sont fixés à l'épaulement 54 du plateau 55 également au moyen de leurs parois rigides 60.

La figure 8 illustre la forme prise par les éléments gonflables par exemple l'élément 51 lorsqu'il est alimenté en air comprimé et deshydraté par l'intermédiaire d'une entrée d'air 65; dans cet état, une pression se trouve exercée par le soufflet 61 (ou la membrane) dans le sens des flèches F, ce qui a pour effet de tendre les ressorts 63. Inversement lorsque l'alimentation en air n'est plus assurée lesdits ressorts (ou la membrane) ramènent le soufflat 61 à sa forme initiale illustrée Figure 7.

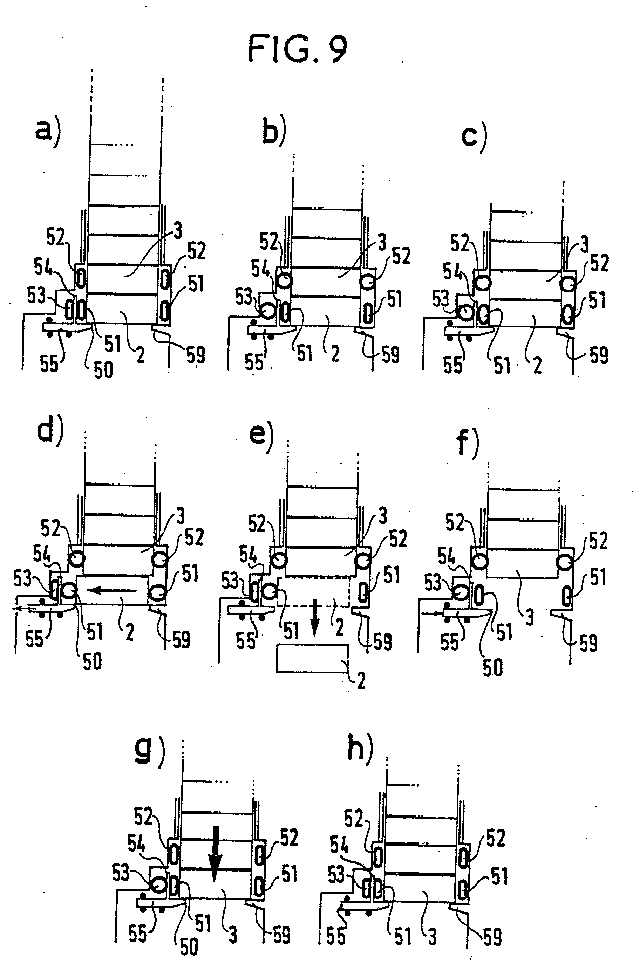

Le fonctionnement du dispositif, va être décrit schématiquement en regard de la figure 9:

— a) les éléments gonflables 51, 52, 53 sont à l'état dégonflé, le maintien de la pile du colis étant assuré par l'extrémité 50 du plateau 55 et les doigts de maintien fixes 59 supportant la face inférieure du colis 2.

C'est la position de repos dans laquelle il est avantageux qu'aucun élément ne travaille:

— b) les éléments 52 et l'élément 53 sont gonflés, ce qui casse toute éventuelle formation de glace sur la surface desdits éléments contre les faces latérales du colis 3, et ceci a pour effet de maintenir le colis 3

— c) les éléments 51 commencent à être gonflés ce qui casse toute éventuelle formation de flace sur la surface desdits éléments et les parois latérales du colis 2

— d) les éléments 51 sont gonflés entièrement, l'élément 53 étant alors dégonflé.

Il en résulte le bris de la glace sur les surfaces supérieure et inférieure du colis 2 par translation latérale de celui-ci, tandis que le plateau 55 s'efface dans l'évidement 58 (figure 6).

— e) l'élément 51 opposé à celui en contact avec le plateau 55 est dégonflé et le colis 2 tombe par simple gravité vers une goulotte de distribution (non représentée) le restant de la pile étant maintenu par les éléments 52.

— f) l'élément 51 en contact avec le plateau 55 est dégonflé à son tour et l'élément 53 gonflé, le plateau se trouve donc ramené à sa position initiale et sort de l'évidement 58, ramenant l'extrémité 50 en position de fermeture, prête à recevoir le colis suivant.

— g) les éléments 52 sont dégonflés ce qui laisse retomber la pile du colis qui vient en appui par l'intermédiaire du colis 3 sur l'extrémité 50 du plateau 55 et les doigts fixes 59.

— h) l'élément 53 est dégonflé à son tour, assurant jusqu'à position finale la réception de la pile du colis à son tour et on revient à la position de repos total illustrée en a) et ainsi de suite.

Les étapes successives ont été représentées séparément pour plus de clarté, mais plusieurs étapes pourront naturellement être effectuées simultanément de sorte que l'ensemble requiert un temps de fonctionnement très court.

On notera en outre que, après la distribution d'un colis, la fermeture est obtenue par le gonflement de l'élément 53 provoquant ainsi le déplacement du plateau 55 de la position ouverte vers la position fermée ou position de repos.

Cette fermeture peut être complétée par un ressort ou un système supplémentaire quelconque de sécurité non représenté.

Il va de soi que l'invention n'est nullement limitée aux exemples qui en ont été donnés à titre illustratif, mais comprend toute variante reprenant avec des moyens équivalents la définition générale figurant aux revendications.

**Revendications**

1. Dispositif pour la distribution de produits surgelés disposés en piles (1) de colis (3, 4) essentielles verticales comportant des moyens de préhension associés à chaque pile et des moyens permettant de désolidariser le colis inférieur (2) de ladite pile tandis que les autres colis restent maintenus, caractérisé par le fait que les portions (11, 12, 13, 21, 51, 52) des moyens de préhension et/ou de désolidarisation destinés à être en contact avec les colis sont essentiellement gonflables de façon que le gonflage ait pour effet de casser toute éventuelle formation de glace à la surface desdits moyens.

2. Dispositif selon la revendication 1, caractérisé par le fait que les moyens de préhension (11, 12, 13) cooperent d'une part avec deux faces latérales opposées des deux derniers colis (2, 3) d'une même pile (1) au moins, et d'autre part avec la face inférieure du dernier colis (2), tout en pouvant s'escamoter de ladite face inférieure pour libérer le passage dudit dernier colis en vue de sa distribution.

3. Dispositif selon la revendication 2, caractérisé par le fait que les moyens de préhension (11, 51) associés au dernier colis (2) deviennent des moyens de désolidarisation lorsque la pression de contact contre les faces latérales opposées dudit colis diffère d'une face à l'autre.

4. Dispositif selon l'une des revendications 1 à 3, caractérisé par le fait qu'un même élément creux déformable unique (21, 51), de part et d'autre de la partie inférieure de la pile de colis, combine les fonctions de préhension et de désolidarisation par sa seule déformation sous l'effet d'air sous pression.

5. Dispositif selon l'une des revendications 1 à 3, caractérisé par le fait qu'il comporte, de part et d'autre des deux derniers colis au moins, des éléments gonflables (11, 12) en regard de deux faces latérales opposées desdits colis, et des éléments gonflables (13) associés à la face inférieure du dernier colis et montés sur un organe mobile (14) permettant leur escamotage à la distribution dudit colis.

6. Dispositif selon la revendication 5, caractérisé par le fait que l'organe mobile (14), rappelé en permanence par des moyens élastiques vers sa position de soutien de la pile associée, est actionné pour son escamotage par un élément gonflable (17).

7. Dispositif selon l'une des revendications 5 et 6, caractérisé par le fait que les éléments gonflables associés à la face inférieure du dernier colis et une partie au moins des éléments gonflables en regard des faces latérales des deux derniers colis au moins, sont essentiellement constitués par des coussins gonflables d'une même enveloppe concernant plusieurs piles de colis.

8. Dispositif selon l'une des revendications 5 et 6, caractérisé par le fait qu'une partie au moins des éléments gonflables (21) en regard des faces latérales des colis est essentiellement constituée par une pluralité de pistons dont la partie mobile présente une face d'extrémité (25) suffisamment mince pour se déformer lorsque ledit piston est alimenté en air sous pression.

9. Dispositif selon la revendication 8, caractérisé par le fait que la partie mobile (21) du piston est formée d'un soufflet (22) arrière entourant la partie fixe (19) dudit piston et d'un bourrelet avant (24) raccordé audit soufflet et relié à des moyens de rappel élastique (26).

10. Dispositif selon la revendication 9, caractérisé par le fait que le bourrelet avant (24) est muni intérieurement d'une rondelle rigide coaxiale (27) au voisinage de la face d'extrémité dudit bourrelet.

11. Dispositif selon l'une des revendications 1 à 4, caractérisé par le fait que lesdits moyens de préhension ainsi que lesdits moyens permettant de désolidariser le colis inférieur de ladite pile tandis que les autres colis restent maintenus, comportent des éléments gonflables (51, 52) comprenant chacun une paroi rigide (60) sur laquelle est adaptée un soufflet pouvant être alimenté en air comprimé, ledit soufflet présentant une partie médiane (62) en forme de deux V en vis-à-vis par leurs extrémités, des moyens internes de rappel (63) étant interposés dans ledit soufflet entre les extrémités desdits V.

12. Dispositif selon la revendication 11, caractérisé par le fait que les éléments gonflables (52) associés à l'avant dernier colis (3) de la pile sont fixés à la paroi (57A) du container (80) recevant les colis par l'intermédiare de leur paroi rigide.

13. Dispositif selon l'une des revendications 11 ou 12, caractérisé par le fait que les éléments gonflables (51) associés au colis inférieur (2) de la pile comportent d'une part au moins un élément gonflable fixé à la paroi (57A) dudit container par l'intermédiaire de sa paroi rigide et d'autre part au moins un couple d'éléments gonflables (51, 53) assujettis par l'intermédiaire de leur paroi rigide de part et d'autre d'un épaulement (54) solidaire d'un plateau (55) pouvant coulisser dans un évidement aménagé dans la paroi dudit container (80).

14. Dispositif selon l'une des revendications 11 à 13, caractérisé par le fait que le dernier colis de la pile repose par l'intermédiaire de sa face inférieure d'une part sur des doigts fixes (59) et d'autre part sur l'extrémité du plateau (55), l'escamotage du plateau dans son évidement libérant le passage du dernier colis (2) en vue de sa distribution.

15. Dispositif selon l'une des revendication 11 à 14, caractérisé par le fait que lesdits moyens internes de rappel (63) interposés dans ledit soufflet entre les extrémités desdits V comportent des ressorts.

16. Dispositif selon l'une des revendications 11 à 14, caractérisé par le fait que lesdits moyens internes de rappel interposés dans ledit soufflet entre les extrémités desdits V comportent une membrane extensible comportant des ouvertures.

17. Dispositif selon l'une des revendications 11 à 16, caractérisé par le fait que ledit plateau (55) comporte à sa partie arrière deux bras de guidage (55A) aptes à coulisser sur des patins (56) fixés à la paroi de l'évidement pouvant recevoir ledit plateau.

18. Dispositif selon l'une des revendications 11 à 17, caractérisé par le fait que la partie avant dudit plateau (55) sur laquelle repose la pile de colis présente une structure échancrée.

19. Dispositif selon l'une des revendications 11 à 18, caractérisé par le fait que la paroi (57C) du logement contre laquelle vient buter l'un des éléments gonflables (53) fixé contre l'épaulement (54) dudit plateau comporte un revêtement déformable (70) confectionné notamment en un matériau élastomère.

20. Dispositif selon l'une des revendications précédentes, caractérisé par le fait qu'il comporte en outre des moyens de commande permettant de distribuer le colis inférieur d'une pile déterminée.

21. Distributeur de produits surgelés selon l'une des revendications précédentes, caractérisé par le fait qu'il comporte une ossature rigide propre d'une part à fixer des moyens de préhension et de désolidarisation associés aux piles de colis et d'autre part à recevoir directement lesdites piles provenant d'un container isotherme, et des moyens de commande permettant de distribuer le colis inférieur d'une pile déterminée en agissant sur les moyens de préhension et de désolidarisation associés à ladite pile, ledit container pouvant être utilisé directement pour la fermeture de l'enceinte du distributeur.

**Patentansprüche**

1. Vorrichtung zur Ausgabe von tiefgefrorenen Produkten, die in im wesentlichen senkrechten Stapeln (1) von Schachteln (3, 4) angeordnet sind, mit jedem Stapel zugeordneten Greifmitteln und Mitteln, die das Ablösen der unteren Schachteil (2) vom Stapel ermöglichen, während die anderen Schachteln gehalten bleiben, dadurch gekennzeichnet, daß die Teile (11, 12, 13, 21, 51, 52) der Greifmittel und/oder Ablösemittel, die mit den Schachteln in Berührung stehen sollen, im wesentlichen aufblasbar sind, so daß das Aufblasen zur Wirkung hat, jede eventuelle Bildung von Eis an der Oberfläche der Mittel zu brechen.

2. Vorrichtung nach Anspruch 1, dadurch gekennzeichnet, daß die Greifmittel (11, 12, 13) einerseits mit mindestens zwei entgegengesetzten Seitenflächen der beiden letzten Schachteln (2, 3) eines gleichen Stapels (1) und andererseits mit der Unterseite der letzten Schachtel (2) zusammenwirken, wobei sie sich aber von dieser Unterseite zurückziehen können, um den Durchlaß für diese letzte Schachtel zu ihrer Ausgabe freizugeben.

3. Vorrichtung nach Anspruch 2, dadurch gekennzeichnet, daß die der letzten Schachtel (2) zugeordneten Greifmittel (11, 51) Ablösemittel werden, wenn die Kontaktdrücke gegen die einander entgegengesetzten Seitenflächen dieser Schachtel ungleich sind.

4. Vorrichtung nach einem der Ansprüche 1 bis 3, dadurch gekennzeichnet, daß ein gleiches, einziges, hohles verformbares Element (21, 51) auf beiden Seiten des unteren Teils des Stapels von Schachteln die Greif- und Ablösefunktionen allein durch seine Verformung unter der Einwirkung von Druckluft kombiniert.

5. Vorrichtung nach einem der Ansprüche 1 bis 3, dadurch gekennzeichnet, daß sie auf beiden Seiten zumindest der beiden letzten Schachteln aufblasbare Elemente (11, 12) gegenüber von zwei einander entgegengesetzten Seitenflächen der Schachteln und der Unterseite der letzten Sachtel zugeordnete aufblasbare Elemente (13) aufweist, die auf einem beweglichen Organ (14) angeordnet sind, das ihr Wegschwenken bei der Ausgabe dieser Schachtel ermöglicht.

6. Vorrichtung nach Anspruch 5, dadurch gekennzeichnet, daß das Wegschwenken des beweglichen Organs (14), das durch elastische Mittel ständig in seine Stützposition für den zugehörigen Stapel zurückgehalten wird, von einem aufblasbaren Element (17) bewirkt wird.

7. Vorrichtung nach einem der Ansprüche 5 und 6, dadurch gekennzeichnet, daß die der Unterseite der letzten Schachtel zugeordneten aufblasbaren Elemente und zumindest ein Teil der aufblasbaren Elemente gegenüber zumindest den beiden letzten Schachteln im wesentlichen aus aufblasbaren Kissen mit einer gleichen Hülle für mehrere Schachtelstepel bestehen.

8. Vorrichtung nah einem der Ansprüche 5 und 6, dadurch gekennzeichnet, daß zumindest ein Teil der aufblasbaren Elemente (21) gegenüber den Seitenflächen der Schachteln im wesentlichen aus einer Vielzahl von Kolben besteht, deren beweglicher Teil eine Endseite (25) aufweist, die dünn genug ist, um sich zu verformen, wenn der Kolben mit Druckluft versorgt wird.

9. Vorrichtung nach Anspruch 8, dadurch gekennzeichnet, daß der bewegliche Teil (21) des Kolbens aus einem hinteren Faltenbalg (22), der den festen Teil (19) des Kolbens umgibt, und aus einem vorderen Wulst (24) besteht, der an den Faltenbalg angeschlossen und mit elastischen Rückholmitteln (26) verbunden ist.

10. Vorrichtung nach Anspruch 9, dadurch gekennzeichnet, daß der vordere Wulst (24) innen mit einer starren koaxialen Scheibe (27) in der Nähe der Endseite des Wulsts ausgestattet ist.

11. Vorrichtung nach einem der Ansprüche 1 bis 4, dadurch gekennzeichnet, daß die Greifmittel wie auch die Mittel, die eine Ablösung der unteren Schachtel des Stapels ermöglichen, während die anderen Schachteln festgehalten werden, aufblasbare Elemente (51, 52) aufweisen, die je eine starre Wand (60) haben, an die ein Faltenbalg angepaßt ist, der mit Druckluft gespeist werden kann, wobei der Faltenbalg einen mittleren Teil (62) in Form zweier sich an ihren Enden gegenüberliegender V aufweist und wobei innere Rückholmittel (63) in dem Faltenbalg zwischen den Enden der Vs angeordnet sind.

12. Vorrichtung nach Anspruch 11, dadurch gekennzeichnet, daß die der vorletzten Schachtel (3) des Stapels zugeordneten aufblasbaren Elemente (52) mit ihrer starren Wand an der Wand (57A) des Containers (80) befestigt sind.

13. Vorrichtung nach einem der Ansprüche 11 oder 12, dadurch gekennzeichnet, daß die der unteren Schachtel (2) des Stapels zugeordneten aufblasbaren Elemente (51) einerseits mindestens ein aufblasbares Element aufweisen, das über seine starre Wand an der Wand (57A) des Containers befestigt ist, und andererseits mindestens ein Paar von aufblasbaren Elementen (51, 53), die über ihre starre Wand auf beiden Seiten einer zu einer Platte (55) gehörenden Schulter (54) begestigt sind, die in einer in der Wand des Containers (80) angebrachten Aushöhlung gleiten kann.

14. Vorrichtung nach einem der Ansprüche 11 bis 13, dadurch gekennzeichnet, daß die letzte Schachtel des Stapels mit ihrer Unterseite einerseits auf festen Fingern (59) und andererseits auf dem Ende der Platte (55) ruht, wobei das Wegschwenken der Platte in ihrer Aushöhlung den Durchlaß der letzten Schachtel (2) zu ihrer Ausgabe freimacht.

15. Vorrichtung nach einem der Ansprüche 11 bis 14, dadurch gekennzeichnet, daß die inneren Rückholmittel (63), die im Faltenbalg zwischen den Enden der Vs angeordnet sind, Federn aufweisen.

16. Vorrichtung nach einem der Ansprüche 11 bis 14, dadurch gekennzeichnet, daß die inneren Rückholmittel, die im Raltenbalg zwischen den Enden der Vs angeordnet sind, eine dehnbare Membran mit Offnungen aufweisen.

17. Vorrichtung nach einem der Ansprüche 11 bis 16, dadurch gekennzeichnet, daß die Platte (55) an ihrem hinteren Teil zwei Führungsarme (55A) aufweist, die auf Kufen (56) gleiten können, welche an der Wand der Aushöhlung befestigt sind und die Platte aufnehmen können.

18. Vorrichtung nach einem der Ansprüche 11 bis 17, dadurch gekennzeichnet, daß der vordere Teil der Platte (55), auf der der Stapel von Schachteln ruht, eine abgeschrägte Struktur aufweist.

19. Vorrichtung nach einem der Ansprüche 11 bis 18, dadurch gekennzeichnet, daß die Wand (57C) des Gehäuses, gegen die eines der aufblasbaren Elemente (53) stößt, das an der Schulter (54) der Platte befestigt ist, eine verformbare Schicht (70) aufweist, die insbesondere aus einem Elastomermaterial besteht.

20. Vorrichtung nach einem der vorstehenden Ansprüche, dadurch gekennzeichnet, daß sie außerdem Steuermittel aufweist, die die Ausgabe der untersten Schachtel eines bestimmten Stapels ermöglichen.

21. Verteiler von Tiefkühlprodukten nach einem der vorstehenden Ansprüche, dadurch gekennzeichnet, daß er ein starres Gerüst aufweist, das einerseit zur Befestigung der zu den Schachteln gehörenden Greif- und Ablösemittel und andererseits dazu dient, direkt die von einem Isothermcontainer kommenden Stepel aufzunehmen, und Steuermittel, die die Ausgabe der unteren Schachtel eines bestimmten Staples dadurch ermöglichen, daß sie auf die zu diesem Stapel gehörenden Greif- und Ablösemittel einwirken, wobei der Container direkt zum Verschließen des Gehäuses des Verteilers genutzt werden kann.

## Claims

1. Device for dispensing frozen goods disposed in essentially vertical piles (1) of packages (3, 4) comprising grasping means associated to each pile and means for separating the lower package (2) of said pile whereas the other packages are held back, characterized in that the parts (11, 12, 13, 21, 51, 52) of the grasping means and/or separating means provided to be in contact with the packages are essentially inflatable so that the inflation has the effect to break any possible formation of ice on the surface of said means.

2. Device according to claim 1, characterized in that the grasping means (11, 12, 13) cooperate on the one hand with two lateral opposite faces of the last two packages (2, 3) of one pile (1) at least, and on the other hand with the lower face of the last package (2), while being retractable from said lower face in order to free the passage of said last package for its dispensation.

3. Device according to claim 2, characterized in that the grasping means (11, 51) associated to the last package (2) become separating means when the contact pressure against the lateral sides of said package differ from one another.

4. Device according to one of the claims 1 to 3, characterized in that one unique deformable hollow element (21, 51) on both sides of the lower part of the pile of packages combines the functions of grasping and separating only by its deformation under the effect of pressurized air.

5. Device according to one of the claims 1 to 3, characterized in that it comprises, on both sides of at least the last two packages inflatable elements (11, 12) facing the two lateral opposite sides of said packages, and inflatable elements (13) associated to the lower face of the last package and mounted on a mobile element (14) permitting their retraction during the dispensation of said package.

6. Device according to claim 5, characterized in that the mobile element (14) which, by elastic means, is permanently called back into its position of supporting the associated pile, is activated for its retraction by an inflatable element (17).

7. Device according to one of the claims 5 and 6, characterized in that the inflatable elements associated to the lower surface of the last package and at least a part of the inflatable elements facing the lateral sides of at least the last two packages are essentially constituted by inflatable cushions, the cushions concerning several piles of packages being included in a common cover.

8. Device according to one of the claims 5 and 6, characterized in that at least a part of the inflatable elements (21) facing the lateral sides of the packages is essentially constituted by a plurality of pistons, the mobile part of which presents an end surface (25) which is sufficiently thin to be deformed when said piston is supplied with pressurized air.

9. Device according to claim 8, characterized in that the mobile part (21) of the piston is formed by a back bellows (22) surrounding the fixed part (19) of said piston and a forward pad (24) connected with said bellows and coupled with elastic return means (26).

10. Device according to claim 9, characterized in that the forward bellows (24) comprises in its interior a coaxial rigid washer (27) near the end surface of said bellows.

11. Device according to one of the claims 1 to 4, characterized in that said grasping means as well as said means permitting to separate the lower package of said pile whereas the other packages are held back comprise inflatable elements (51, 52) comprising each a rigid wall (60) to which is adapted a bellows which can be supplied with pressurized air, said bellows presenting a middle part (62) in the form of two Vs facing each other with their ends, interior return means (63) being disposed in said bellows between the ends of said Vs.

12. Device according to claim 11, characterized in that the inflatable elements (52) associated to the last but one package (3) of the pile are fixed by means of their rigid wall to the wall (57A) of the container (80) receiving the packages.

13. Device according to one of the claims 11 or 12, characterized in that the inflatable elements (51) associated to the lower package (2) of the pile comprise on the one hand at least an inflatable element fixed to the wall (57A) of said container by means of its rigid wall, and on the other hand at least a couple of inflatable elements (51, 53) fastened by means of their rigid wall on each side of a shoulder (54) solidary with a plate (55) which can glide in a recess worked in the wall of said container (80).

14. Device according to one of the claims 11 to 13, characterized in that the last package of the pile lays by means of its lower surface on the one hand on fixed fingers (59) and on the other hand on the end of the plate (55), the retraction of the plate into its recess freeing the passage of the last package (2) for its dispensation.

15. Device according to one of the claims 11 to 14, characterized in that said interior return means (63) which are disposed in said bellows between the ends of said Vs comprise springs.

16. Device according to one of the claims 11 to 14, characterized in that said interior return means disposed in said bellows between the ends of said Vs′ comprise an extensible membrane with openings.

17. Device according to one of the claims 11 to 16, characterized in that said plate (55) comprises at its back end two guiding arms (55A) able to glide on guides (56) arranged on the wall of the recess receiving said plate.

18. Device according to one of the claims 11 to 17, characterized in that the forward part of said plate (55) on which lays the pile of packages presents a champfered structure.

19. Device according to one of the claims 11 to 18, characterized in that the wall (57C) of the recess against which rests one of the inflatable elements (53) fixed against the shoulder (54) of said plate, comprises a deformable covering (70) made of elastomer material.

20. Device according to one of the foregoing claims, characterized in that it further comprises control means allowing to dispense the lower package of a specific pile.

21. Dispensor of frozen goods according to one of the foregoing claims, characterized in that it comprises a rigid frame able on the one hand to fix grasping and separating means associated to the piles of packages and on the other hand to receive directly said piles coming from an isotherm container, and control means permitting to dispense the lower package of a specific pile by activating the grasping and separating means associated to said pile, said container being used directly for the closing of the carter of the dispensor.

# FIG.1

# FIG.2

0013976

# FIG.3

# FIG.4

2

# FIG.5

FIG. 6

FIG. 7

FIG. 8

4

0013976

# FIG. 9

a) b) c)

d) e) f)

g) h)

5